# EUROPEAN PATENT APPLICATION

(11) **EP 1 459 617 A1**
(43) Date of publication of application: **22.09.2004**
(21) Application number: 03380063.2
(22) Date of filing: 20.03.2003
(51) Int. Cl.: A01D 78/06

(54) **Device for lining-up the forage adapted to a harvest machine**

(71) Applicant: Nueno Ciria, Francisco, 22810 Quinzano (Huesca) (ES); Tresaco Lopez, Daniel, 22810 Quinzano (Huesca) (ES)
(72) Inventor: Nueno Ciria, Francisco, 22810 Quinzano (Huesca) (ES); Tresaco Lopez, Daniel, 22810 Quinzano (Huesca) (ES)
(74) Representative: Ungria Lopez, Javier

(57) **Abstract**

Device for lining-up the forage adapted to a harvest machine, being of the type of lining-up device that groups together the forage spread over the field in lines or the forage is grouped in lines and it regroups them into a smaller number of lines so that, in a second operation, they are gathered by the corresponding harvest machine, in such a way that the lining-up device (1) comprises a pair of arms (2) defined by a structure provided with a pair of pulleys (6) between which is a conveyor belt (7) fitted with a series of bent rods (8), with rotary movement being transmitted to one of the pulleys (6) of each arm (2) by a hydraulic motor (9), the arms (2) being rotationally joined to the front side of the harvest machine (3) by means of a shaped section (5) and a hydraulic cylinder (4) for actuation of the corresponding shaped section (5).

## Description

### OBJECT OF THE INVENTION

As stated in the title of this descriptive specification, the present invention refers to a device for lining-up forage adapted to a harvest machine, which is of the type of lining-up device which, when worked in the field, causes the forage, which during the gathering has become spread over the entire field, to be accumulated in lines, and when the forage has been arranged in lines the lining-up device, pulled by a tractor, groups the forage lines into a smaller number of lines, which are later on gathered by means of the corresponding harvest machine, pulled by a tractor.

By means of the device for lining-up the forage adapted to a harvest machine for the forage arranged in lines, the two operations can be carried out simultaneously, representing an important saving in labour.

So, in the advance of the tractor pulling the harvest machine to which the lining-up device has been adapted in its forward part, the device causes a minimum of two lines of forage to be led to the central part, defining a single line which is gathered by the harvest machine, to which the lining-up device has been adapted.

### FIELD OF APPLICATION OF THE INVENTION

The device for lining-up the forage that is presented has application in those agricultural tasks in which it is wished to effect a regrouping of the forage into lines, both when this is spread over the entire surface of the field and when it is arranged in lines in order to regroup them into a smaller number of lines, so that they are arranged for gathering by means of the corresponding harvest machine.

### BACKGROUND OF THE INVENTION

With the passing of time, the different agricultural tasks have undergone a logical advance, so that today there exist means that are not at all like the manual tasks which used to be performed years ago, in such a way that the time needed for harvesting has been drastically reduced by using the current means existing for the different tasks which have to be carried out during harvesting.

If we focus on the gathering of the forage, harvest machines currently in existence permit bales of considerable volume and weight to be obtained, given that the handling is done automatically rather than manually.

So, in the harvesting, the forage can be spread over the entire surface of the field being harvested, or it can be left forming a series of lines, in such a way that for its harvesting the forage spread over the entire surface of the field is grouped into lines while the forage forming a series of lines can be grouped into a smaller number of lines, this task being carried out by means of the corresponding lining-up device.

In this way, there exist various types of lining-up device on the market, but they all have in common the fact that they concern independent machines which are pulled by the corresponding tractor, so that in a first operation the forage is gathered by means of the corresponding harvest machine pulled by the respective tractor, in other words, the harvesting of the forage using lining-up devices is carried out in two independent operations.

Between the different lining-up devices in existence, we can cite that which comprises one or several bodies provided with a series of horizontally mounted arms bearing some rakes, in such a way that as those arms rotate the rakes gather the forage and drag it to the forward advance position, where the rakes are then raised releasing the forage in order to define the corresponding line of grouped forage.

Also, another type of lining-up device comprises a series of rakes in the form of rotating discs mounted in the vertical position, out of phase with each other with respect to the direction of advance, so that the forage is dragged by the different rotating discs of the rakes from the exterior towards the interior in order to define the corresponding line of forage.

Finally, we can cite a lining-up device consisting of a pair of arms, each one of the arms being defined by a structure bearing a pair of end discs between which is a positioned a series of shafts provided with rods for acting on the forage. In this way, the arms remain in the lateral position and in their functioning the rotation of the pair of discs causes the shafts bearing the rods to rotate and drag the forage towards the central part between the two arms, defining a central line of forage, for which the discs remain in the vertical position and the shafts remain permanently fixed to them.

In short, all the existing lining-up devices consist of heavy structures defining an independent machine which in its work is pulled by the corresponding tractor in such a way that, of course, certain lining-up devices, due to their dimensions, are suitable for being folded in order to adopt a transport position.

### DESCRIPTION OF THE INVENTION

This present specification describes a lining-up device for forage adapted to a harvest machine, being of the type of lining-up device that groups together the forage spread over the field in lines or the forage is grouped in lines and it regroups them into a smaller number of lines so that, in a second operation, they are gathered by the corresponding harvest machine, characterised in that the lining-up device comprises a pair of arms defined by a structure provided with a pair of pulleys between which is a conveyor belt fitted with a series of bent rods, with rotary movement being transmitted to one of the pulleys of each arm by a hydraulic motor, the arms being rotationally joined to the front side of the harvest machine by means of a shaped section and a hydraulic cylinder for actuation of the corresponding shaped section.

The conveyor belts relative to the pair of arms of the lining-up device present a slight inclination with respect to a vertical plane, their lower side remaining slightly withdrawn with respect to the upper side, while the external end of the arms is slightly advanced with respect to the internal end of them.

The bent rods fixed to the two conveyor belts present their free end joined via a rubber body, with the free end of the rods remaining beneath the level of the forward lower side of the conveyor belt which, in its movement, displaces the forage towards the central part where it empties into the harvest machine.

The hydraulic motors for actuation of the corresponding pulley for each pair of arms are independent and have a pump as their power source, also independent of the tractor, though from which it takes power for its functioning.

The angle of positioning of the arms with respect to the direction of advance, and also the angle of inclination of the conveyor belt arranged between the corresponding pair of pulleys is adjustable in relation to the point where the shaped sections join the structure of the arms.

The support shaped sections for the structure of the arms of the lining-up device, having a rotational union with respect to the front side of the harvest machine, can be telescopic, with the external telescopic section for union with the arms being operated by a cylinder which permits its withdrawal into the transport position by reducing its height.

In order to complement the description that is going to be made forthwith, and with the aim of aiding a better understanding of the characteristics of the invention, this specification is accompanied by a set of drawings in which the most characteristic details of the invention are represented in a manner that is illustrative and not limiting.

### BRIEF DESCRIPTION OF THE DRAWINGS

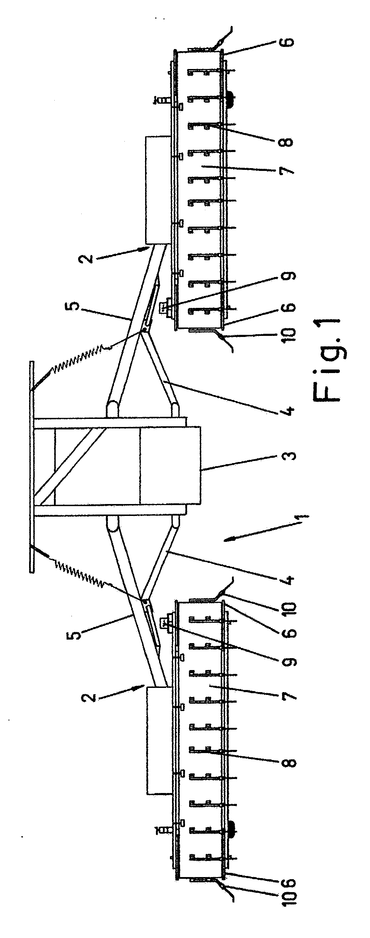

Figure 1.- Shows a front view of the lining-up device adapted to the forward side part of a forage harvest machine in its working position, where it can be seen how the lining-up device presents a pair of arms that include a continuous conveyor belt provided with a series of bent rods for dragging the forage.

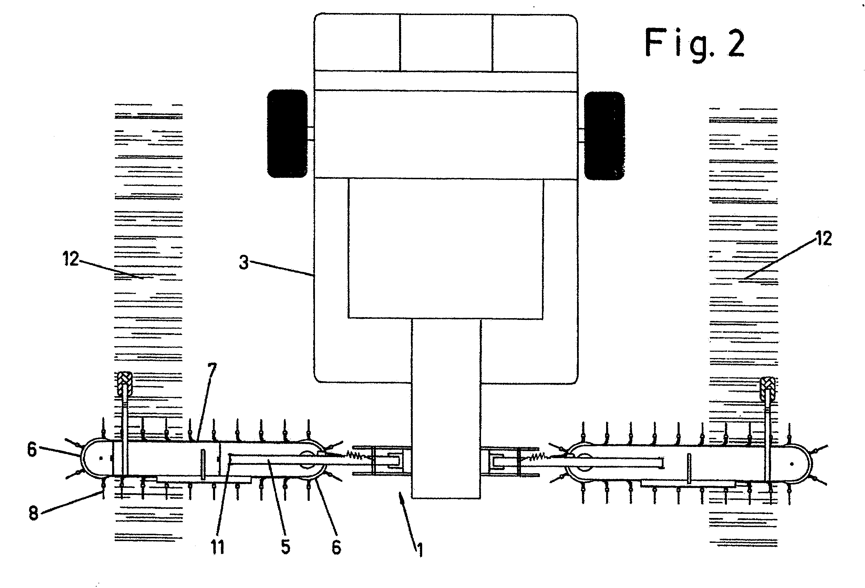

Figure 2.- Shows a plan view of the lining-up device adapted to the harvest machine pulled by the corresponding tractor, where it can be seen how the arms that include a continuous conveyor belt are above the respective lines of forage whose product is dragged towards the central part defining a line which is gathered by the harvest machine.

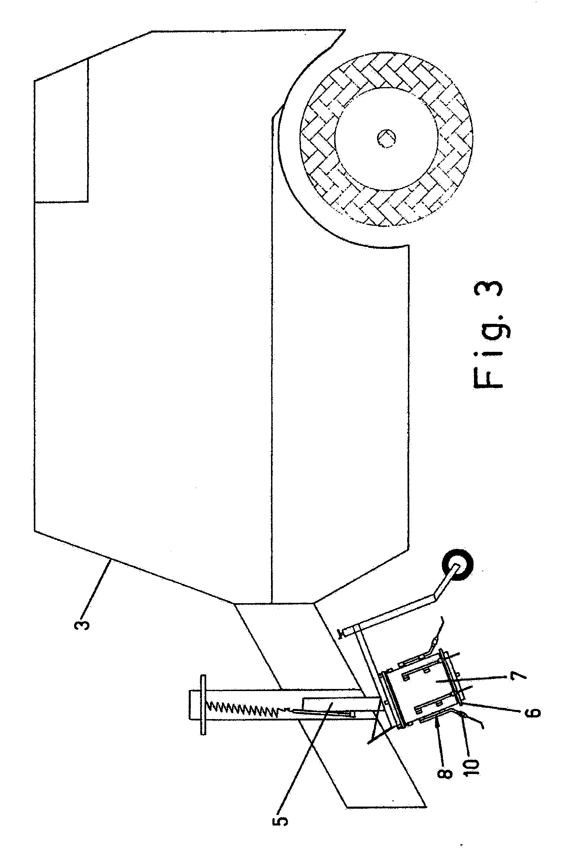

Figure 3.- Shows a side raised view of the forage harvest machine to which the lining-up machine has been adapted, where it can be seen how the conveyor belt, provided with a series of bent rods for dragging the forage, presents a certain inclination with respect to a vertical plane, with the bent rods likewise presenting a certain inclination with respect to the vertical.

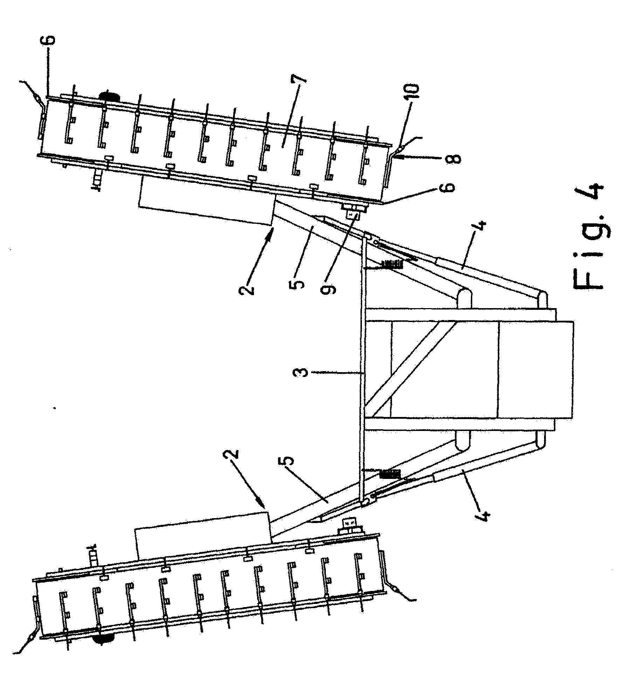

Figure 4.- Shows a front view of the lining-up device adapted to the rear part of a forage harvest machine in its transport position, in which the arms have been raised until they are almost in the vertical position.

### DESCRIPTION OF AN EMBODIMENT OF THE INVENTION

In view of the commented figures and in accordance with the numbering adopted, we can see how the lining-up device 1 comprises a pair of arms 2 which are rotationally joined to the front part of a forage harvest machine 3, the arms 2 being actuated by the corresponding hydraulic cylinder 4 so that it can adopt a working position and another transport position by acting on the shaped sections 5 having rotational union with the harvest machine.

So, the arms 2 consist of a support structure comprising a pair of pulleys 6 between which is a continuous conveyor belt 7 provided with a series of bent rods 8, in such a way that rotational movement is transmitted to one of the pulleys 6 by the corresponding hydraulic motor 9, whose power source is a pump independent of the tractor machine, though it takes power from that tractor machine for its functioning.

The bent rods 8 present their flexible end fixed via a rubber body 10, in such a way that any possible breakage of the free end of the rods 10 for dragging the forage caused by possible knocks and blows against the ground is avoided.

Moreover, the union 11 of the shaped sections 5 with the support structure of the arms 2 permits the positioning of the arms to be adapted with respect to the ground, so that the external free end of the arms can be slightly advanced with respect to their internal end, and likewise the conveyor belt 7 can define an inclination with respect to a vertical plane, as can be seen in figure 3 of the designs. Similarly, the free end of the rods 8 define an inclination with respect to a vertical plane.

In this way, in the normal functioning of the lining-up device 1, the harvest machine 3 is pulled by the corresponding tractor, in such a way that the motors 9 cause the rotation of the respective pulleys 6 producing the movement of the conveyor belts 7, causing the forage of the lines 12 to be dragged from the exterior toward the central part between the arms 2, with the harvest machine 3 gathering the forage that has been centrally regrouped.

So, in a single operation, the regrouping takes place of the lines 12 of forage in a single central line which is gathered directly by the harvest machine 3, thereby producing an important saving in labour.

In short, the basic essence of the lining-up machine 1 is based on the conveyor belt 7 mounted between the pair of pulleys 6, to one of which movement is transmitted by a motor 9 so that the movement of the conveyor belts 7 causes the rods 8 to drag the forage towards the central part defining a single line of forage for being gathered by the harvest machine 3.

The lining-up device 1 can adopt a transport position, for which it will suffice to actuate the hydraulic cylinders 4 so that the shaped sections 5 rotate with respect to their rotational union with the harvest machine 3, the arms 2 being left in a position that is practically vertical to the ground.

Moreover, the shaped sections 5 for supporting the arms 2 can be telescopic, in such a way that, by means of a simple cylinder, the telescopic sections 5 can be withdrawn, being gathered in with respect to their end part towards their union with the harvest machine 3, reducing the height reached by the arms 2 with the aim of facilitating transport.

The structure that is described of the arms 2 of the lining-up device 1 permits it to be adapted to a harvest machine as a consequence of its simplicity and low volume and weight, being able to have two machines in a single machine, permitting two operations to be carried out at once, namely, grouping of the forage into lines and the simultaneous gathering of it.

Of course, the lining-up device 1 can be designed as an independent machine just by joining the arms to a support structure which can be linked to a tractor as is conventionally done.

## Claims

1. **DEVICE FOR LINING-UP FORAGE, ADAPTED TO A HARVEST MACHINE**, being of the type of lining-up devices that group together the forage spread over a field in lines or that regroup into a smaller number of lines the forage grouped in lines, to be gathered in a second operation by the corresponding harvest machine, **characterised in that** the lining-up device (1) comprises a pair of arms (2) defined by a structure provided with a pair of pulleys (6) between which there is a conveyor belt (7) provided with a series of bent rods (8), transmitting a rotary movement to one of the pulleys (6) of each arm (2), a hydraulic motor (9), the arms (2) being rotationally joined to a front side of the harvest machine (3) by means of a shaped section (5) and of a hydraulic cylinder (4) for actuation of the corresponding shaped section (5).

2. **DEVICE FOR LINING-UP FORAGE, ADAPTED TO A HARVEST MACHINE** according to claim 1, **characterised in that** the conveyor belts (7) of the arms (2) are provided with a slight inclination with respect to a vertical plane, their lower side remaining slightly withdrawn with respect to an upper side, and the external end of the arms (2) is slightly projected with respect to an internal end.

3. **DEVICE FOR LINING-UP FORAGE, ADAPTED TO A HARVEST MACHINE** according to any of claims 1 and 2, **characterised in that** the bent rods (8) have their free end joined via a rubber body (10), with the free end of the rods (8) being beneath a level of a forward lower side of the conveyor belt (7) which, in its movement, displaces the forage towards a central part to which it empties into the harvest machine (3).

4. **DEVICE FOR LINING-UP FORAGE, ADAPTED TO A HARVEST** MACHINE according to the preceding claims, **characterised in that** the hydraulic motors (9) for actuation of the corresponding pulley (6) of each pair of arms (2) are independent, having as power supply a pump independent of a tractor vehicle, though taking power for its functioning from said tractor vehicle.

5. **DEVICE FOR LINING-UP FORAGE, ADAPTED TO A HARVEST MACHINE** according to any of claims 1, 2 and 3, **characterised in that** an angle of positioning of the arms (2) with respect to a direction of advance, and also an angle of inclination of the conveyor belt (7) arranged between the corresponding pair of pulleys (6), is adjustable in relation to a point where the shaped sections (5) join the structure of the arms (2).

6. **DEVICE FOR LINING-UP FORAGE, ADAPTED TO A HARVEST MACHINE** according to claim 1, **characterised in that** the shaped sections (5) of rotary union with respect to the front side of the harvest machine can be telescopic, with an external telescopic section for union with the arms (2) being operated by a cylinder which permits its withdrawal into a transport position by reducing its height.

## Amended claims

### Amended claims under Art. 19.1 PCT

1. **DEVICE FOR LINING-UP FORAGE, ADAPTED TO A HARVEST MACHINE,** being of the type of lining-up devices that group together the forage spread over a field in lines or that regroup into a smaller number of lines the forage grouped in lines, to be gathered in a second operation by the corresponding harvest machine; the lining-up device (1) comprising a pair of arms (2) defined by a structure provided with a pair of pulleys (6) between which there is a conveyor belt (7) provided with a series of bent rods (8), transmitting a rotary movement to one of the pulleys (6) of each arm (2), a hydraulic motor (9), the arms (2) being rotationally joined to a front side of the harvest machine (3) by means of a shaped section (5) and of a hydraulic cylinder (4) for actuation of the corresponding shaped section (5); **characterised in that** an angle of positioning of the arms (2) with respect to a direction of advance, and also an angle of inclination of the conveyor belt (7) arranged between the corresponding pair of pulleys (6), is adjustable in relation to a point where the shaped sections (5) join the structure of the arms (2).

2. **DEVICE FOR LINING-UP FORAGE, ADAPTED TO A HARVEST MACHINE** according to claim 1, **characterised in that** the conveyor belts (7) of the arms (2) are provided with a slight inclination with respect to a vertical plane, their lower side remaining slightly withdrawn with respect to an upper side, and the external end of the arms (2) is slightly projected with respect to an internal end.

3. **DEVICE FOR LINING-UP FORAGE, ADAPTED TO A HARVEST MACHINE** according to any of claims 1 and 2, **characterised in that** the bent rods (8) have their free end joined via a rubber body (10), with the free end of the rods (8) being beneath a level of a forward lower side of the conveyor belt (7) which, in its movement, displaces the forage towards a central part to which it empties into the harvest machine (3).

4. **DEVICE FOR LINING-UP FORAGE, ADAPTED TO A HARVEST MACHINE** according to the preceding claims, **characterised in that** the hydraulic motors (9) for actuation of the corresponding pulley (6) of each pair of arms (2) are independent, having as power supply a pump independent of a tractor vehicle, though taking power for its functioning from said tractor vehicle.

5. **DEVICE FOR LINING-UP FORAGE, ADAPTED TO A HARVEST MACHINE** according to claim 1, **characterised in that** the shaped sections (5) of rotary union with respect to the front side of the harvest machine can be telescopic, with an external telescopic section for union with the arms (2) being operated by a cylinder which permits its withdrawal into a transport position by reducing its height.
